# EUROPEAN PATENT APPLICATION

(11) **EP 4 373 152 A1**
(43) Date of publication of application: **22.05.2024**
(21) Application number: 21949588.4
(22) Date of filing: 12.07.2021
(51) Int. Cl.: H04W 24/08

(54) **COMMUNICATION METHOD AND APPARATUS THEREOF**

(71) Applicant: Beijing Xiaomi Mobile Software Co., Ltd., Beijing 100085 (CN)
(72) Inventor: CHI, Liangang, Beijing 100085 (CN)
(74) Representative: dompatent von Kreisler Selting Werner - Partnerschaft von Patent- und Rechtsanwälten mbB
(86) International application number: PCT/CN2021/105857
(87) International publication number: WO 2023/283792

(57) **Abstract**

The present invention relates to the technical field of communications, and provides a communication method and apparatus thereof. The method comprises: configuring a measurement bandwidth and a sub-band of a carrier, and communicating with a user equipment (UE) by means of the sub-band; receiving a measurement value, fed back by the UE, for the sub-band; and adjusting a sub-band configuration corresponding to the carrier according to the measurement value of the sub-band. Hence, according to the measurement value, fed back by the UE, for the sub-band, a network device performs reasonable adjustment on the sub-band configuration corresponding to the carrier, thereby avoiding the problem of mutual interference between multiple UEs.

## Description

### TECHNICAL FIELD

The present disclosure relates to a communication technical field, and more particularly to a communication method and a communication apparatus.

### BACKGROUND

In related art, with the development of radio frequency interference cancellation technology and digital domain interference cancellation technology, in some scenarios, co-frequency co-time full duplex technology may be used on a network device side. However, since it is limited by factors such as size and cost of a user equipment, time division duplex (TDD) or frequency division duplex (FDD) technology needs to be used on the user equipment side.

In this scenario, the network device may use the same time and frequency to transmit and receive, which causes mutual interference between a plurality of user equipment in the same cell or adjacent cells. How to avoid mutual interference between a plurality of user equipment is a problem that needs to be solved.

### SUMMARY

In a first aspect, embodiments of the present disclosure provide communication method. The method is performed by a network device, and includes: configuring a measurement bandwidth and a subband of a carrier, and communicating with a user equipment (UE) via the subband; receiving a measurement value of the subband fed back by the UE; adjusting subband configuration corresponding to the carrier according to the measurement value of the subband.

Alternatively, the subband configuration is used to configure types of a plurality of the subbands in the carrier. The types of the subbands include an uplink type, a downlink type and a flexible type.

Alternatively, in the method, when the type of the subband is the downlink type, the network device transmits data to the UE on the subband; when the type of the subband is the uplink type, the network device receives data transmitted by the UE on the subband; when the type of the subband is the flexible type, the network device configures the subband for uplink transmission, downlink transmission, or null transmission via a configuration signaling.

Alternatively, adjusting the subband configuration corresponding to the carrier according to the measurement value of the subband includes: determining whether the measurement value of the subband reaches a first threshold corresponding to the subband; in case that the first threshold corresponding to the subband is reached, adjusting the subband configuration according to the measurement value of the subband.

Alternatively, the network device receives a plurality of the measurement values fed back by the UE. Adjusting the subband configuration corresponding to the carrier according to the measurement value of the subband includes: making a decision based on one measurement value in the plurality of the measurement values, or making a comprehensive decision based on the plurality of the measurement values to adjust the subband configuration.

Alternatively, the method further includes sending the subband configuration adjusted to the UE.

Alternatively, the measurement value of the subband includes one or more of a reference signal received power (RSRP), a reference signal received quality (RSRQ), a received signal strength indication (RSSI), or a signal-to-noise and interference ratio (SINR).

Alternatively, the method further includes sending the subband configuration to the UE via a configuration signaling.

Alternatively, the configuration signaling is a radio resource control (RRC) common signaling, a RRC dedicated signaling or a downlink control information (DCI) signaling.

In a second aspect, embodiments of the present disclosure provide a communication method, applied to UE and including: receiving signals sent by a network device via subbands in a measurement bandwidth based on subband configuration; measuring communication quality according to the signals received to generate a measurement value of each subband corresponding to the UE; sending the measurement value of the subband to the network device.

Alternatively, the subband configuration is used to configure types of a plurality of subbands in a carrier. The types of the subbands include an uplink type, a downlink type and a flexible type.

Alternatively, in the method, when the type of the subband is the downlink type, the UE receives data transmitted by the network device on the subband; when the type of the subband is the uplink type, the UE transmits data to the network device on the subband; when the type of the subband is the flexible type, the network device configures the subband for uplink transmission, downlink transmission, or null transmission via a configuration signaling.

Alternatively, sending the measurement value of the subband to the network device includes: determining whether the measurement value of the subband is greater than or equal to a second threshold corresponding to the subband; in case that the measurement value of the subband is greater than or equal to the second threshold corresponding to the subband, sending the measurement value of the subband to the network device; in case that the measurement value of the subband is less than the second threshold corresponding to the subband, not sending the measurement value of the subband to the network device.

Alternatively, the UE corresponds to a plurality of subbands. Sending the measurement value of the subband to the network device includes: for each subband corresponding to the UE, determining whether the measurement value of the subband is greater than or equal to the second threshold corresponding to the subband; in case that the measurement value of any subband is greater than or equal to the second threshold corresponding to the subband, sending the measurement value of the subband to the network device; in case that the measurement value of each subband corresponding to the UE is less than the second threshold corresponding to the subband, not sending the measurement value of the subband to the network device.

Alternatively, the method further includes sending an identifier of the measurement bandwidth and an identifier of the subband to the network device.

Alternatively, the measurement value of the subband includes one or more of RSRP, RSRQ, RSSI, or SINR.

Alternatively, the method further includes receiving the subband configuration sent by the network device via a configuration signaling.

Alternatively, the configuration signaling is a RRC common signaling, a RRC dedicated signaling or a DCI signaling.

In third aspect, embodiments of the present disclosure provide a communication apparatus, applied to a network device and including: a transceiver unit configured to configure a measurement bandwidth and a subband of a carrier, communicate with a user equipment (UE) via the subband, and receive a measurement value of the subband fed back by the UE; and a processing unit configured to adjust subband configuration corresponding to the carrier according to the measurement value of the subband.

Alternatively, the subband configuration is used to configure types of a plurality of the subbands in the carrier. The types of the subbands include an uplink type, a downlink type and a flexible type.

Alternatively, when the type of the subband is the downlink type, the network device transmits data to the UE on the subband; when the type of the subband is the uplink type, the network device receives data transmitted by the UE on the subband; when the type of the subband is the flexible type, the network device configures the subband for uplink transmission, downlink transmission, or null transmission via a configuration signaling.

Alternatively, the processing unit is specifically configured to: determine whether the measurement value of the subband reaches a first threshold corresponding to the subband; in case that the first threshold corresponding to the subband is reached, adjust the subband configuration according to the measurement value of the subband.

Alternatively, the network device receives a plurality of the measurement values fed back by the UE. The processing unit is specifically configured to: make a decision based on one measurement value in the plurality of the measurement values, or make a comprehensive decision based on the plurality of the measurement values to adjust the subband configuration.

Alternatively, the transceiver unit is further configured to send the subband configuration adjusted to the UE.

Alternatively, the measurement value of the subband includes one or more of a reference signal received power (RSRP), a reference signal received quality (RSRQ), a received signal strength indication (RSSI), or a signal-to-noise and interference ratio (SINR).

Alternatively, the transceiver unit is further configured to send the subband configuration to the UE via a configuration signaling.

Alternatively, the configuration signaling is a radio resource control (RRC) common signaling, a RRC dedicated signaling or a downlink control information (DCI) signaling.

In a fourth aspect, embodiments of the present disclosure provide a communication apparatus, applied to a UE and including: a transceiver unit configured to receive signals sent by a network device via subbands in a measurement bandwidth based on subband configuration; a processing unit configured to measure communication quality according to the signals received to generate a measurement value of each subband corresponding to the UE. The transceiver unit is further configured to send the measurement value of the subband to the network device.

Alternatively, the subband configuration is used to configure types of a plurality of subbands in a carrier. The types of the subbands include an uplink type, a downlink type and a flexible type.

Alternatively, when the type of the subband is the downlink type, the UE receives data transmitted by the network device on the subband; when the type of the subband is the uplink type, the UE transmits data to the network device on the subband; when the type of the subband is the flexible type, the network device configures the subband for uplink transmission, downlink transmission, or null transmission via a configuration signaling.

Alternatively, the transceiver unit is specifically configured to: determine whether the measurement value of the subband is greater than or equal to a second threshold corresponding to the subband; in case that the measurement value of the subband is greater than or equal to the second threshold corresponding to the subband, send the measurement value of the subband to the network device; in case that the measurement value of the subband is less than the second threshold corresponding to the subband, not send the measurement value of the subband to the network device.

Alternatively, the UE corresponds to a plurality of subbands, and the transceiver unit is specifically configured to: for each subband corresponding to the UE, determine whether the measurement value of the subband is greater than or equal to the second threshold corresponding to the subband; in case that the measurement value of any subband is greater than or equal to the second threshold corresponding to the subband, send the measurement value of the subband to the network device; in case that the measurement value of each subband corresponding to the UE is less than the second threshold corresponding to the subband, not send the measurement value of the subband to the network device.

Alternatively, the transceiver unit is further configured to send an identifier of the measurement bandwidth and an identifier of the subband to the network device.

Alternatively, the measurement value of the subband includes one or more of RSRP, RSRQ, RSSI, or SINR.

Alternatively, the transceiver unit is further configured to receive the subband configuration sent by the network device via a configuration signaling.

Alternatively, the configuration signaling is a RRC common signaling, a RRC dedicated signaling or a DCI signaling.

In a fifth aspect, embodiments of the present disclosure provide a communication device, including a processor and a memory. A computer program is stored in the memory, and the processor executes the computer program stored in the memory to cause the device to execute the communication method provided in the first aspect embodiments of the present disclosure.

In a sixth aspect, embodiments of the present disclosure provide another communication device, including a processor and a memory. A computer program is stored in the memory, and the processor executes the computer program stored in the memory to cause the device to execute the communication method provided in the second aspect embodiments of the present disclosure.

In a seventh aspect, embodiments of the present disclosure provide a communication device, including a processor; and an interface circuit. The interface circuit is configured to receive code instructions and transmit the code instructions to the processor. The processor is configured to run the code instructions to perform the communication method provided in the first aspect embodiments of the present disclosure.

In an eighth aspect, embodiments of the present disclosure provide a communication device, including a processor; and an interface circuit. The interface circuit is configured to receive code instructions and transmit the code instructions to the processor. The processor is configured to run the code instructions to perform the communication method provided in the second aspect embodiments of the present disclosure.

In a ninth aspect, embodiments of the present disclosure provide a computer-readable storage medium having stored therein indications that, when executed, cause the communication method in the above-mentioned first aspect embodiments to be implemented.

In a tenth aspect, embodiments of the present disclosure provide a computer-readable storage medium having stored therein indications that, when executed, cause the communication method in the above-mentioned second aspect embodiments to be implemented.

In an eleventh aspect, embodiments of the present disclosure provide a computer program product including a computer program. When the computer program is executed by a processor, the communication method provided in the first aspect embodiments of the present disclosure is implemented.

In a twelfth aspect, embodiments of the present disclosure provide a computer program product including a computer program. When the computer program is executed by a processor, the communication method provided in the second aspect embodiments of the present disclosure is implemented.

The communication method and the communication apparatus provided by embodiments of the present disclosure configure the measurement bandwidth and the subband of the carrier through the network device, communicate with the user equipment (UE) via the subband, receive the measurement value of the subband fed back by the UE, and adjust the subband configuration corresponding to the carrier according to the measurement value of the subband, which enables the network device to reasonably adjust the subband configuration corresponding to the carrier based on the subband measurement value fed back by the UE, thus avoiding the problem of mutual interference between a plurality of UEs.

Additional aspects and advantages of the present disclosure will be set forth in part in the description which follows, and in part will be obvious from the description, or may be learned by practice of the disclosure.

### BRIEF DESCRIPTION OF THE DRAWINGS

These above-mentioned and/or additional aspects and advantages of embodiments of the present disclosure will become apparent and more readily appreciated from the following descriptions made with reference to the drawings, in which:
FIG. 1 is a schematic flowchart of a communication method provided by an embodiment of the present disclosure;
FIG. 2 is a schematic flowchart of a communication method provided by another embodiment of the present disclosure;
FIG. 3 is a schematic flowchart of a communication method provided by another embodiment of the present disclosure;
FIG. 4 is a schematic flowchart of a communication method provided by another embodiment of the present disclosure;
FIG. 5 is a schematic flowchart of a communication method provided by another embodiment of the present disclosure;
FIG. 6 is a schematic flowchart of a communication method provided by another embodiment of the present disclosure;
FIG. 7 is a schematic diagram of a communication apparatus provided by an embodiment of the present disclosure;
FIG. 8 is a schematic diagram of a communication apparatus provided by another embodiment of the present disclosure;
FIG. 9 is a schematic diagram of a user equipment (UE) provided by an embodiment of the present disclosure;
FIG. 10 is a schematic diagram of a network device provided by an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the disclosure as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It is understood that, although terms such as "first," "second" and "third" are used herein for describing various information, these information should not be limited by these terms. These terms are only used for distinguishing information of the same type. For example, first information may also be called second information, and similarly, the second information may also be called the first information, without departing from the scope of the present disclosure. As used herein, the term "if' may be construed to mean "when" or "upon" or "in response to determining" depending on the context.

Embodiments of the present disclosure are described in detail below, examples of which are illustrated in the drawings. The same or similar elements are denoted by same reference numerals in different drawings unless indicated otherwise. The embodiments described herein with reference to drawings are explanatory, and used to generally understand the present disclosure. The embodiments shall not be construed to limit the present disclosure.

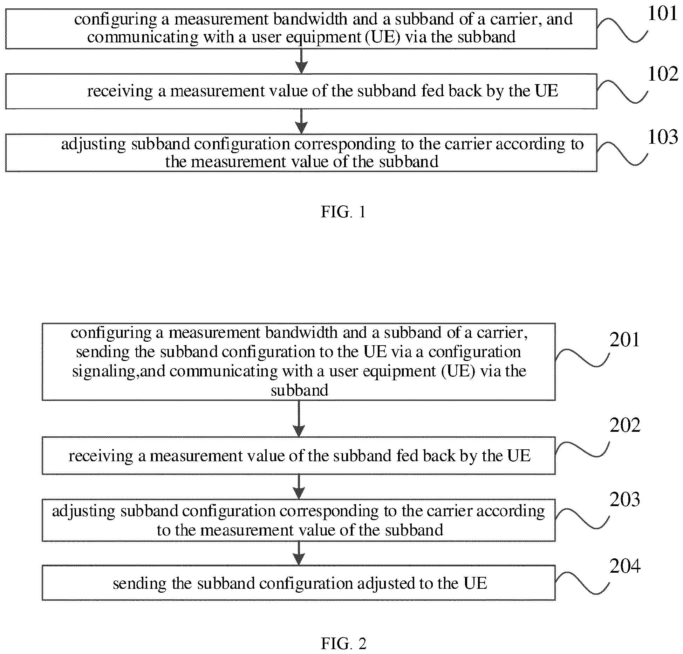

FIG. 1 is a schematic flowchart of a communication method provided by an embodiment of the present disclosure. It is noted that the communication method in embodiments of the present disclosure is applied to a network device.

As shown in FIG. 1, the communication method includes the following steps.

In step 101, a measurement bandwidth and a subband of a carrier are configured, and it is communicated with a user equipment (UE) via the subband.

For example, the network device may be a base station; or a user equipment (UE), such as a UE covered by a base station.

The UE may refer to a device that provides voice and/or data connectivity to users. The UE may communicate with one or more core networks via radio access network (RAN). The UE may be a user equipment of an Internet of Things (IoT), such as a sensor device, a mobile phone (or called a cellular phone) and computers with IoT user equipment. For example, the user equipment may be fixed, portable, pocket, hand-held, computer built-in or vehicle-mounted devices. For example, the user equipment may be a station (STA), a subscriber unit, a subscriber station, a mobile station, a mobile, a remote station, an access point, a remote terminal, an access terminal, a user terminal, or a user agent. Alternatively, the UE may also be equipment of an unmanned aerial vehicle. Alternatively, the UE may also be a vehicle-mounted device, for example, a trip computer with a wireless communication function, or a wireless user equipment connected externally to the trip computer. Alternatively, the UE may also be a roadside device, for example, may be a street lamp, a signal lamp, or other roadside devices with a wireless communication function.

It is noted that in embodiments of the present disclosure, the UE communicating with the network device may be a single UE in a cell covered by the network device, a group of UEs in a cell covered by the network device, or all UEs in a cell covered by the network device, which is not limited in embodiments of the present disclosure. Each embodiment of the present disclosure is explained by taking all UEs as examples.

The subband is a continuous frequency band that contains one or more physical resource blocks (PRBs). The physical resource block is a frequency domain unit and consists of continuous subcarriers.

In an illustrative embodiment, the network device may configure the measurement bandwidth of the carrier and divide the measurement bandwidth into a plurality of subbands, and may configure the UE corresponding to each subband and a subband type of each subband, and then communicate with each UE separately. The subband corresponding to the UE refers to the subband configured by the network device, and used when communicating with the UE.

The types of the subbands include an uplink type, a downlink type and a flexible type.

In one embodiment of the present disclosure, when the types of the subbands corresponding to the UE are different, ways in which the network device communicates with the UE via the subband are also different.

When the type of the subband is the downlink type, the network device may transmit data to the UE on the subband. When the type of the subband is the uplink type, the network device may receive data transmitted by the UE on the subband. When the type of the subband is the flexible type, the network device may configure the subband for uplink transmission, downlink transmission, or null transmission via a configuration signaling. In one embodiment of the present disclosure, the network device may specifically configure the flexible type of the subband as the uplink transmission, the downlink transmission, or the null transmission via the configuration signaling, so that when the UE determines that the type of the subband corresponding to itself is the flexible type, it may determine whether the subband is used for the uplink transmission, the downlink transmission, or the null transmission via the configuration signaling.

In one embodiment of the present disclosure, when the flexible type subband is configured as null, the network device does not perform any operation on the subband.

It is noted that the network device may configure each subband to correspond to one UE, or it may also configure a plurality of subbands to correspond to one UE, which is not limited in the present disclosure. In addition, when the same UE corresponds to a plurality of subbands, the types of each subband may be the same or different, which is not limited in the present disclosure.

In step 102, a measurement value of the subband fed back by the UE is received.

In an illustrative embodiment, each UE may measure communication quality for the communication with the network device via the corresponding subband, generate the measurement value for the subband, and feed back the measurement value of the subband to the network device. The measurement value of the subband may reflect an interference level when the UE communicates with the network device via the subband.

It is noted that for the same UE, when the UE corresponds to one subband, the UE feeds back to the network device the measurement value of the subband corresponding to the UE. When the UE corresponds to a plurality of subbands, the UE feeds back to the network device the measurement value for each subband corresponding to the UE.

In one embodiment of the present disclosure, each UE may only measure communication quality of the subband with the downlink type corresponding to the UE, and generate a measurement value of the subband with the downlink type, and feedback the measurement value of the subband with the downlink type to the network device.

In step 103, subband configuration corresponding to the carrier is adjusted according to the measurement value of the subband.

In an illustrative embodiment, after receiving the measurement value of the corresponding subband fed back by each UE, the network device may adjust the subband configuration corresponding to the carrier according to the measurement value of the subband.
Specifically, the network device may adjust the types of the plurality of the subbands in the carrier and the UEs corresponding to the plurality of the subbands.

For example, assume that a type of subband 1 corresponding to a user equipment A (UE-A) configured by the network device is the uplink type, a type of subband 2 corresponding to a user equipment B (UE-B) is the downlink type, and a distance between UE-A and UE-B is relatively close. Assume that after the network device communicates with UE-A and UE-B respectively via the corresponding subbands, UE-B feeds back to the network device the measurement value for subband 2 with the downlink type, and the measurement value for subband 2, which reflects that a communication process between UE-B and the network device is interfered by UE-A, then the network device may, for example, adjust the subband configuration corresponding to the carrier as follows: unify the types of subbands corresponding to UE-A and UE-B respectively, for example, adjust the type of subband 1 corresponding to UE-A to the downlink type, or adjust the type of subband 2 corresponding to UE-B to the uplink type. Alternatively, the network device may add a subband with a null type between the subbands corresponding to UE-A and UE-B respectively to isolate the communication between UE-A and the network device and the communication between UE-B and the network device.

In this way, when there is mutual interference between uplink and downlink services in UEs, the network device may reasonably adjust the subband configuration corresponding to the carrier based on the subband measurement values fed back by the UE, so as to avoid interference between the UE and the network device when communicating with the network device.

In summary, the network device configures the measurement bandwidth and the subband of the carrier, communicates with the user equipment (UE) via the subband, receives the measurement value of the subband fed back by the UE, and adjusts the subband configuration corresponding to the carrier according to the measurement value of the subband, which realizes reasonable adjustment of the subband configuration corresponding to the carrier according to the subband measurement values fed back by the UE, thus avoiding the problem of mutual interference between the plurality of UEs.

Embodiments of the present disclosure provides another communication method. FIG. 2 is a schematic flowchart of another communication method provided by an embodiment of the present disclosure. The communication method may be applied to a network device. The communication method may be executed alone or in combination. Any embodiment or possible implementation in embodiments of the present disclosure may be executed together, or may be executed in combination with any technical solution in related art.

As shown in FIG. 2, the communication method may include the following steps.

In step 201, a measurement bandwidth and a subband of the carrier are configured, subband configuration is sent to the UE via a configuration signaling, and the network device communicates with a user equipment (UE) via the subbands.

In an illustrative embodiment, the network device may configure the measurement bandwidth of the carrier and divide the measurement bandwidth into a plurality of subbands, and may configure the UE corresponding to each subband and a subband type of each subband, and send subband configuration to the UE via the configuration signaling., thereby communicating with each UE via the configured subbands corresponding to each UE.

The subband configuration is used to configure the types of the plurality of subbands in the carrier. The types of subband include an uplink types, a downlink types and a flexible types. When the type of the subband is the downlink type, the network device may transmit data to the UE on the subband. When the type of the subband is the uplink type, the network device may receive data transmitted by the UE on the subband. When the type of the subband is the flexible type, the network device may configure the subband for uplink transmission, downlink transmission, or null transmission via a configuration signaling. In one embodiment of the present disclosure, the network device may specifically configure the flexible type of the subband as the uplink transmission, the downlink transmission, or the null transmission via the configuration signaling, so that when the UE determines that the type of the subband corresponding to itself is the flexible type, it may determine whether the subband is used for the uplink transmission, the downlink transmission, or the null transmission via the configuration signaling.

In an illustrative embodiment, the network device may send the subband configuration to a single UE, a group of UEs, or all UEs covered by the network device via the configuration signaling. The configuration signaling may be, for example, a radio resource control (RRC) common signaling, a RRC dedicated signaling, or a downlink control information (DCI) signaling.

In one embodiment of the present disclosure, the network device may send the subband configuration to a single UE in a cell covered by the network device via the RRC dedicated signaling. The subband configuration sent by the network device to a single UE may be unique to the UE. In another embodiment of the present disclosure, the network device may send the subband configuration to a group of UEs in a cell covered by the network device via the DCI signaling. The subband configuration sent by the network device to a group of UEs may be shared by the group of UEs. In another embodiment of the present disclosure, the network device may send the subband configuration to all UEs in a cell covered by the network device via the RRC public signaling. The subband configuration sent by the network device to all UEs may be shared by all UEs.

In step 202, a measurement value of the subband fed back by the UE is received.

In an illustrative embodiment, the measurement value of the subband includes one or more of a reference signal received power (RSRP), a reference signal received quality (RSRQ), a received signal strength indication (RSSI), or a signal-to-noise and interference ratio (SINR).

For detailed introduction to step 202, reference may be made to the relevant introduction in the above embodiments, and embodiments of the present disclosure will not be repeated here.

In step 203, subband configuration corresponding to the carrier is adjusted according to the measurement value of the subband.

In an illustrative embodiment, after receiving the measurement value of the corresponding subband fed back by each UE, the network device may adjust the subband configuration corresponding to the carrier according to the measurement value of the subband.
Specifically, the network device may adjust the types of the plurality of the subbands in the carrier and the sequence numbers of the subbands corresponding to each UE, etc.

For example, assume that a type of subband 1 corresponding to UE-A configured by the network device is the uplink type, a type of subband 2 corresponding to UE-B is the downlink type, and a distance between UE-A and UE-B is relatively close. Assume that after the network device communicates with UE-A and UE-B respectively via the corresponding subbands, UE-B feeds back to the network device the measurement value for subband 2 with the downlink type, and the measurement value for subband 2 reflects that there is interference between UE-A and UE-B in a communication process with the network device, then the network device may, for example, adjust the subband configuration corresponding to the carrier as follows: unify the types of subbands corresponding to UE-A and UE-B respectively, for example, adjust the type of subband 1 corresponding to UE-A to the downlink type, or adjust the type of subband 2 corresponding to UE-B to the uplink type. Alternatively, the network device may maintain the uplink type of subband 1 unchanged, configure subband 2 as null, and configure subband 3 to correspond to UE-B, so as to isolate communication between UE-A and the network device and communication between UE-B and the network device.

In this way, when there is mutual interference between uplink and downlink services in UEs, the network device may reasonably adjust the subband configuration corresponding to the carrier based on the subband measurement values fed back by the UE, so as to avoid interference between the UE and the network device when communicating with the network device.

In step 204, the subband configuration adjusted is sent to the UE.

In an illustrative embodiment, after the network device adjusts the subband configuration corresponding to the carrier according to the measurement value of the subband, the network device may also send the adjusted subband configuration to each UE, so that each UE may determine the corresponding subband and the type of the subband after adjusting the subband configuration, so as to enable the network device and each UE to communicate with each UE via the subband after adjusting the subband configuration. Specifically, the network device may send the adjusted subband configuration to the UE via the configuration signaling. For a specific process of sending the adjusted subband configuration to the UE, reference may be made to the above process of sending the subband configuration to the UE, which will not be described again here.

In summary, the network device configures the measurement bandwidth and the subband of the carrier, sends the subband configuration to the UE via the configuration signaling, communicates with the user equipment (UE) via the subband, receives the measurement value of the subband fed back by the UE, adjusts the subband configuration corresponding to the carrier according to the measurement value of the subband, and sends the adjusted subband configuration to the UE, which realizes that the network device reasonably adjusts the subband configuration corresponding to the carrier according to the measurement value of the subband fed back by the UE, thereby avoiding the problem of mutual interference between a plurality of UEs.

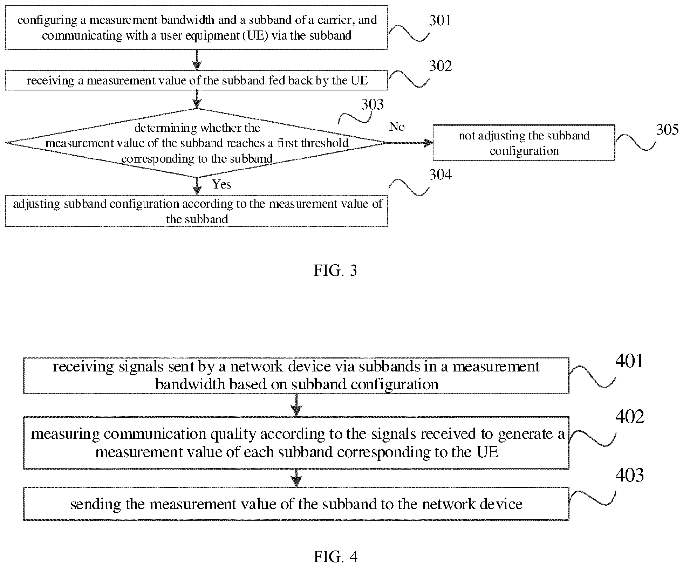

Embodiment of the present disclosure provide another communication method. FIG. 3 is a schematic flowchart of another communication method provided by an embodiment of the present disclosure. The communication method may be applied to a network device. The communication method may be executed alone or in combination. Any embodiment or possible implementation in embodiments of the present disclosure may be executed together, or may be executed in combination with any technical solution in related technologies.

As shown in FIG. 3, the communication method may include the following steps.

In step 301, a measurement bandwidth and a subband of a carrier are configured, and the network device is communicated with a user equipment (UE) via the subband.

In step 302, a measurement value of the subband fed back by the UE is received.

For the specific implementation process and principles of steps 301 to 302, reference can be made to the description of the above embodiments and will not be described again here.

In step 303, it is determined whether the measurement value of the subband reaches a first threshold corresponding to the subband. If the measurement value of the subband reaches a first threshold corresponding to the subband, step 304 is executed; otherwise, step 305 is executed.

In step 304, subband configuration is adjusted according to the measurement value of the subband.

In step 305, the subband configuration is not adjusted.

The measurement value of the subband may reflect the interference level when the UE communicates with the network device via the subband.

The first threshold may be configured as needed. The first threshold may be configured by the network device, or may be determined according to a protocol, which is not limited in the present disclosure. The first threshold is a threshold for the network device to determine whether to adjust the subband configuration.

It is noted that for different subbands, the same first threshold may be configured, or different first thresholds may also be configured, which is not limited in the present disclosure. In addition, when the types of the measurement value of the subbands are different, the corresponding first thresholds are also different. For example, when the measurement value of the subband is a reference signal received power (RSRP) or a reference signal received quality (RSRQ), the first thresholds corresponding to the subbands are different.

In one embodiment of the present disclosure, after receiving the measurement value of each subband corresponding to each UE fed back by each UE, the network device may determine whether the measurement value of each subband reaches the first threshold corresponding to each subband. When the measurement value of any subband reaches the first threshold corresponding to the subband, the network device may adjust the subband configuration corresponding to the carrier according to the measurement value reaching the first threshold. When the measurement value of each subband does not reach the corresponding first threshold, the network device may determine that the interference between the UEs is small when communicating with the network device, and the subband configuration corresponding to the carrier may not be adjusted at this time.

Taking a certain UE as an example, assuming that the UE corresponds to one subband, when the measurement value fed back by the UE for the corresponding subband reaches the first threshold corresponding to the subband, the network device may determine that the interference is relatively large when the UE communicates with the network device via the subband corresponding to the measurement value. At this time, the network device may adjust the subband configuration corresponding to the carrier according to the measurement value of the subband. For example, the subband type of the subband corresponding to the UE may be adjusted, or the subband type of the subband corresponding to the UE adjacent to the UE is adjusted, etc.

In one embodiment of the present disclosure, when the measurement value of the subband includes one of RSRP, RSRQ, RSSI, or SINR, the network device only needs to determine whether the measurement value of the corresponding subband fed back by each UE reaches the corresponding first threshold, and the subband configuration corresponding to the carrier is adjusted according to the measurement value that reaches the first threshold.

In one embodiment of the present disclosure, when the measurement value of the subband includes two or more of RSRP, RSRQ, RSSI, or SINR, the network device needs to separately determine whether each measurement value fed back by each UE for its subband reaches the corresponding first threshold, and the subband configuration corresponding to the carrier is adjusted according to the measurement value that reaches the first threshold. In an embodiment of the present disclosure, if there are a plurality of measurement values, a corresponding first threshold may be set for each measurement value. Only measurement values exceeding the corresponding first threshold will be reported by the UE. If the measurement value does not exceed the corresponding first threshold, the corresponding measurement value will not be reported. Of course, in other embodiments of the present disclosure, a unified first threshold may also be set, and measurement values exceeding the unified first threshold will be reported. If not, the measurement values will not be reported. In addition, the network device may make a decision based on one of the plurality of measurement values reported by the UE, or make a comprehensive decision based on the the plurality of measurement values to adjust the subband configuration.

In one embodiment of the present disclosure, the network device may adjust the subband configuration corresponding to the carrier as follows, such as, adjusting the types of the plurality of the subbands in the carrier, or adjusting the sequence number of the subband corresponding to each UE, or adjusting the types of the plurality of the subbands in the carrier and the the sequence numbers of the subbands corresponding to each UE.

For example, assume that a type of subband 1 corresponding to UE-A configured by the network device is the uplink type, a type of subband 2 corresponding to UE-B is the downlink type, and a distance between UE-A and UE-B is relatively close. Assume that after the network device communicates with UE-A and UE-B respectively via the corresponding subbands, UE-B feeds back to the network device the measurement value of the corresponding subband 2 of the downlink type, and the measurement value of subband 2 reflects that there is mutual interference between UE-A and UE-B during the communication process with the network device, then the network device may, for example, adjust the subband configuration corresponding to the carrier in the following manner.

### Manner 1

The subband types of subband 1 or subband 2 in the carrier are adjusted. For example, the type of subband 1 corresponding to UE-A is adjusted to the downlink type, or the type of subband 2 corresponding to UE-B is adjustedto the uplink type, so as to unify the types of subbands corresponding to UE-A and UE-B.

### Manner 2

The sequence numbers of the subbands corresponding to UE-A or UE-B are adjusted. For example, subband 1 is configured to still correspond to UE-A, the uplink type corresponding to subband 1 is maintained to be unchanged, subband 2 is configured to be null, and subband 3 with a subband type of downlink type is configured to correspond to UE-B, so as to isolate the uplink communication between UE-A and the network device and the downlink communication between UE-B and the network device via subband 2.

### Manner 3

The subband types of subband 1 or subband 2 in the carrier, and the sequence number of the subband corresponding to UE-A or UE-B are adjusted. For example, subband 1 is configured to still correspond to UE-A, and the type of subband 1 is adjusted to the downlink type, subband 2 is configured as null, and subband 3 with a subband type of downlink type is configured to correspond to UE-B, so as to isolate the downlink communication between UE-A and the network device and the downlink communication between UE-B and the network device via subband 2.

In summary, the network device configures the measurement bandwidth and the subband of the carrier, communicates with the user equipment (UE) via the subband, receives the measurement value of the subband fed back by the UE, and determines whether the measurement value of the subband reaches the first threshold corresponding to the subband. If the measurement value reaches the first threshold corresponding to the subband, the subband configuration is adjusted according to the measurement value of the subband, which realizes that the network device reasonably adjusts the subband configuration corresponding to the carrier according to the measurement value of the subband fed back by the UE, thereby avoiding the problem of mutual interference between multiple UEs.

Embodiment of the present disclosure provides another communication method. FIG. 4 is a schematic flowchart of another communication method provided by an embodiment of the present disclosure. The communication method may be applied to a user equipment. The communication method may be executed alone or in combination. Any embodiment or possible implementation in embodiments of the present disclosure may be executed together, or may be executed in combination with any technical solution in the related art.

As shown in FIG. 4, the communication method may include the following steps.

In step 401, a signal sent by subbands in a measurement bandwidth configured by the network device based on the subbands are is received.

The network device may be, for example, a base station. The user equipment (UE) may be a UE covered by the base station. It is noted that the UE in embodiments may be any UE in a cell covered by the network device.

The UE may refer to a device that provides voice and/or data connectivity to users. The UE may communicate with one or more core networks via radio access network (RAN). The UE may be a terminal of an Internet of Things (IoT), such as a sensor device, a mobile phone (or called a cellular phone) and computers with IoT terminal. For example, the user equipment may be fixed, portable, pocket, hand-held, computer built-in or vehicle-mounted devices. For example, the user equipment may be a station (STA), a subscriber unit, a subscriber station, a mobile station, a mobile, a remote station, an access point, a remote terminal, an access terminal, a user terminal, or a user agent. Alternatively, the UE may also be equipment of an unmanned aerial vehicle. Alternatively, the UE may also be a vehicle-mounted device, for example, a trip computer with a wireless communication function, or a wireless user equipment connected externally to the trip computer. Alternatively, the UE may also be a roadside device, for example, may be a street lamp, a signal lamp, or other roadside devices with a wireless communication function.

The subband is a continuous frequency band that contains one or more physical resource blocks (PRBs). The physical resource block is a frequency domain unit and consists of continuous subcarriers.

In an illustrative embodiment, the network device may configure the measurement bandwidth of the carrier and divide the measurement bandwidth into a plurality of subbands, and may configure the UE corresponding to each subband and the subband type of each subband, and each UE may communicate with the network device via the corresponding subband. The subband corresponding to the UE refers to the subband configured by the network device and used when communicating with the UE.

The subband configuration is used to configure the types of the plurality of subbands in the carrier. The subband types may include an uplink type, a downlink type and a flexible type.

In one embodiment of the present disclosure, when the types of the subbands corresponding to the UE are different, the ways in which the UE and the network device communicate via the subband are also different.

When the type of the subband is the downlink type, the UE receives data transmitted by the network device on the subband. When the type of the subband is the uplink type, the UE transmits data to the network device on the subband. When the type of the subband is the flexible type, the UE configures the subband for uplink transmission, downlink transmission, or null transmission via a configuration signaling. In one embodiment of the present disclosure, the network device may specifically configure the flexible type of the subband as the uplink transmission, the downlink transmission, or the null transmission via the configuration signaling, so that when the UE determines that the type of the subband corresponding to itself is the flexible type, it may determine whether the subband is used for the uplink transmission, the downlink transmission, or the null transmission via the configuration signaling.

In one embodiment of the present disclosure, when the flexible type of the subband is configured as null, the UE does not perform any operation on the subband.

It is noted that the network device may configure each subband to correspond to one UE, or the network device may also configure a plurality of subbands to correspond to one UE, which is not limited in the present disclosure. In addition, when the same UE corresponds to a plurality of subbands, the types of each subband may be the same or different, which is not limited in the present disclosure.

In step 402, communication quality is measured according to the signal received to generate a measurement value of each subband corresponding to the UE.

In step 403, the measurement value of the subband is sent to the network device.

In an illustrative embodiment, after receiving the signal sent by the subband in the measurement bandwidth configured by the network device based on the subband, the UE may measure the communication quality according to the received signal and generate the measurement value for each subband corresponding to the UE, and then send the measurement value for each subband corresponding to the UE to the network device. That is, the UE may only measure communication quality for each subband of the downlink type corresponding to the UE, generate the measurement value for each subband of the downlink type, and then send the measurement value for the subband of the downlink type to the network device. The measurement value of the subband may reflect the interference level when the UE communicates with the network device via the subband.

It is noted that when the UE corresponds to one subband, the UE may perform communication quality measurement based on the received signal sent by the subband to generate the measurement value of the subband corresponding to the UE, and then send the measurement value of the subband to the network device. When the UE corresponds to a plurality of subbands, the UE may perform communication quality measurements based on the received signals sent by each subband to generate measurement values for each subband corresponding to the UE, and then send the measurement values of each subband to the network device.

In summary, the UE receives the signal sent by the subband in the measurement bandwidth configured by the network device based on the subband, performs communication quality measurement based on the received signal to generate the measurement value of each subband corresponding to the UE, and sends the measurement value of the subband to the network device, which may assist the network device to reasonably adjust the subband configuration corresponding to the carrier based on the subband measurement values fed back by the UE, thus avoiding the problem of mutual interference between a plurality of UEs.

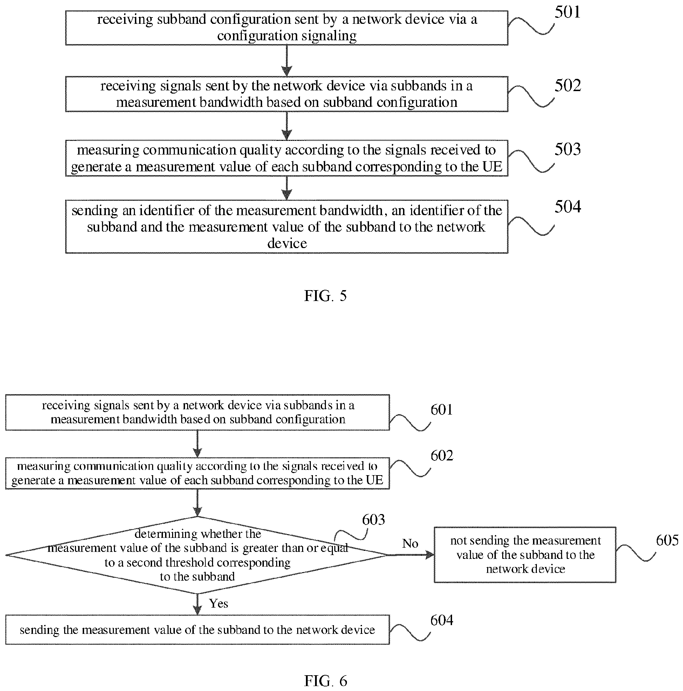

Embodiments of the present disclosure provides another communication method. FIG. 5 is a schematic flowchart of another communication method provided by an embodiment of the present disclosure. The communication method may be applied to a user equipment. The communication method may be executed alone or in combination. Any embodiment or possible implementation in embodiments of the present disclosure may be executed together, or may be executed in combination with any technical solution in related art.

As shown in FIG. 5, the communication method may include the following steps.

In step 501, subband configuration sent by a network device via a configuration signaling is received.

In an illustrative embodiment, after the network device configures the measurement bandwidth of the carrier, divides the measurement bandwidth into multiple a plurality of subbands, and configures the UE corresponding to each subband and the subband type of each subband, the network device may send the subband configuration to UE via the configuration signaling, so that the UE may receive the subband configuration sent by the network device via the configuration signaling.

The subband configuration is used to configure the types of the plurality of the subbands in the carrier. The subband types include an uplink type, a downlink type and a flexible type. When the type of the subband is the downlink type, the UE receives data transmitted by the network device on the subband. When the type of the subband is the uplink type, the UE transmits data to the network device on the subband. When the type of the subband is the flexible type, the network device configures the subband as uplink transmission, downlink transmission, or as null transmission via a configuration signaling.

The configuration signaling may be, for example, a radio resource control (RRC) common signaling, a RRC dedicated signaling or a downlink control information (DCI) signaling.

In one embodiment of the present disclosure, the network device may send the subband configuration to a single UE in a cell covered by the network device via the RRC dedicated signaling. The subband configuration sent by the network device to a single UE may be unique to the UE. Correspondingly, the UE in embodiments of the present disclosure may obtain the subband configuration sent by the network device via the RRC dedicated signaling. In another embodiment of the present disclosure, the network device may send the subband configuration to a group of UEs in a cell covered by the network device via the downlink control information (DCI) signaling. The subband configuration sent by the network device to a group of UEs may be shared by the group of UEs. Accordingly, the UE in embodiments of the present disclosure may obtain the subband configuration sent by the network device via the DCI signaling. In another embodiment of the present disclosure, the network device may send subband configurations to all UEs in the cells covered by the network device via the RRC common signaling. The subband configurations sent by the network device to all UEs may be shared by all UEs. Accordingly, the UE in embodiments of the present disclosure may obtain the subband configuration sent by the network device via the RRC common signaling.

In step 502, signals sent by the network device based on the subband in the measurement bandwidth configured by the subband is received.

In step 503, communication quality is measured according to the signal received to generate a measurement value for each subband corresponding to the UE.

In an illustrative embodiment, after the UE receives the subband configuration sent by the network device via a configuration signaling, the UE may determine its corresponding subband and subband type according to the subband configuration, and communicate with the network device based on the corresponding subband. After receiving the signal sent by the subband in the measurement bandwidth configured by the network device based on the subband, the UE may perform communication quality measurement based on the received signal and generate the measurement value of each subband corresponding to the UE. That is, the UE may only perform communication quality measurement for each subband of the downlink type corresponding to the UE, and generate a measurement value for each subband of the downlink type.

The measurement value of the subband includes one or more of RSRP, RSRQ, RSSI, or SINR.

In step 504, an identifier of the measurement bandwidth and an identifier of the subband are sent to the network device.

In an illustrative embodiment, after the UE generates the measurement value of the subband, the UE may send the measurement value of the subband to the network device. In addition, in order to enable the network device to distinguish which subband measurement value the subband measurement value sent by the UE is and which subband in the measurement bandwidth the subband is, the UE may send the identifier of the subband corresponding to the measurement value of the subband and the identifier of the corresponding measurement bandwidth to the network device while sending the measurement value of the subband.

In an illustrative embodiment, when the UE sends the identifier of the measurement bandwidth, the identifier of the subband, and the measurement value of the subband to the network device, the transmission may be performed in various forms.

In one embodiment of the present disclosure, the UE may send the identifier of the measurement bandwidth, the identifier of the subband, and the measurement value of the subband to the network device in a form of a list. The position in the list one-to-one corresponds to the identifier of the subband and the identifier of the measurement bandwidth. The UE may place the measurement value of each subband in the corresponding position of the list, so that the measurement value of each subband one-to-one corresponds to the identifier of the subband and the identifier of the measurement bandwidth.

In another embodiment of the present disclosure, the UE may send the identifier of the measurement bandwidth, the identifier of the subband, and the measurement value of the subband to the network device in the form of one or more "identifier + measurement value of the subband" in series.

In an illustrative embodiment, after the UE sends the identifier of the measurement bandwidth, the identifier of the subband, and the measurement value of the subband to the network device, the network device may adjust the subband configuration corresponding to the carrier according to the measurement value of the subband, and send the adjusted subband configuration to the UE. Correspondingly, the UE may also receive the adjusted subband configuration to communicate with the network device through the adjusted subband configuration.

In summary, the UE receives the subband configuration sent by the network device via the configuration signaling, receives the signal sent by the subband in the measurement bandwidth of the network device based on the subband configuration, performs communication quality measurement based on the received signal to generate the measurement value of each subband corresponding the UE, sends the identifier of the measurement bandwidth, the identifier of the subband, and the measurement value of the subband to the network device, which may assist the network device to reasonably adjust the subband configuration corresponding to the carrier according to the measurement value of the subband fed back by the UE, thereby avoiding the problem of mutual interference between a plurality of UEs.

Embodiments of the present disclosure provide a communication method. FIG. 6 is a schematic flowchart of a communication method provided by an embodiment of the present disclosure. The communication method may be applied to a user equipment. The communication method may be executed alone or in combination with any embodiment or possible implementation in embodiments, and also be combined with any technical solution in related art.

As shown in FIG6, the communication method may include the following steps.

In step 601, signals sent by a network device based on a subband in a measurement bandwidth configured by the subband is received.

In step 602, communication quality is measured according to the signal received to generate a measurement value of each subband corresponding to the UE.

The measurement value of the subband may include one or more of RSRP, RSRQ, RSSI, or SINR.

It is noted that when the UE corresponds to one subband, the UE may perform communication quality measurement based on the received signal sent by the subband to generate the measurement value of the subband corresponding to the UE. When the UE corresponds to a plurality of subbands, the UE may measure communication quality based on the received signal sent by each subband to generate a measurement value of each subband corresponding to the UE.

In step 603, it is determined whether the measurement value of the subband is greater than or equal to a second threshold corresponding to the subband. If the measurement value of the subband is greater than or equal to the second threshold, step 604 is performed; otherwise, step 605 is performed.

In step 604, a measurement value of the subband is sent to the network device.

In step 605, the measurement value of the subband is not sent to the network device.

The measurement value of the subband may reflect the interference level when the UE communicates with the network device via the subband.

The second threshold may be configured as needed. The second threshold may be configured by the network device or may be determined according to a protocol, which is not limited in the present disclosure. The second threshold is a threshold for the UE side to determine whether to report the measurement values.

It is noted that for different subbands, the same second threshold may be configured, or different second thresholds may also be configured, which is not limited in the present disclosure. In addition, when the types of measurement values of the subbands are different, the corresponding second thresholds are also different. For example, when the measurement value of the subband is a reference signal received power (RSRP) or a reference signal received quality (RSRQ), the second thresholds corresponding to the subbands are different.

In an embodiment of the present disclosure, when the UE corresponds to one subband, the UE may determine whether the measurement value of the subband is greater than or equal to the second threshold corresponding to the subband. If the measurement value of the subband is greater than or equal to the second threshold, it indicates that the interference between the UE and the network device is relatively large when the UE communicates with the network device via the subband corresponding to the measurement value, and the measurement value of the subband may be sent to the network device. If the measurement value of the subband is less than the second threshold corresponding to the subband, it indicates that the interference between the UE and the network device is small when the UE communicates with the network device via the subband corresponding to the measurement value, and the measurement value of the subband does not need to be sent to the network device.

In another embodiment of the present disclosure, when the UE corresponds to a plurality of subbands, for each subband, the UE may determine whether the measurement value of the subband is greater than or equal to the second threshold corresponding to the subband. If the measurement value of any subband is greater than or equal to the second threshold corresponding to the subband, it indicates that the interference between the UE and the network device is relatively large when the UE communicates with the network device via the subband corresponding to the measurement, and the measurement value greater than or equal to the second threshold may be sent to the network device. If the measurement values of each subband are less than the corresponding second threshold, it means that the interference between the UE and the network device is small when the UE communicates with the network device via the subbands corresponding to each measurement value, and the measurement value of subbands do not need to be sent to the network device.

In an embodiment of the present disclosure, when the measurement value of the subband includes one of RSRP, RSRQ, RSSI or SINR, the UE only needs to determine whether the measurement value of one or more subbands is greater than or equal to the second threshold, and send the measurement value of subbands greater than or equal to the second threshold to the network device.

In one embodiment of the present disclosure, when the measurement value of the subband includes two or more of RSRP, RSRQ, RSSI, or SINR, the UE needs to separately determine whether each measurement value of one or more subbands is greater than or equal to the second threshold, and send the measurement value of the subbands greater than or equal to the second threshold to the network device. In one embodiment of the present disclosure, if there are a plurality of measurement values, the corresponding second threshold may be set for each measurement value, and only measurement values exceeding the corresponding second threshold will be reported by the UE to the network device. If the measurement value does not exceed the corresponding second threshold, the corresponding measurement value will not be reported by the UE. Of course, in other embodiments of the present disclosure, a unified second threshold may also be set, and the measurement values exceeding the unified second threshold will be reported. If the measurement values do not exceed the unified second threshold, they will not be reported. In addition, for the plurality of the measurement values reported by the UE, the network device may make a decision based on one of the the plurality of the measurement values, or make a comprehensive decision based on the plurality of measurement values to adjust the subband configuration.

In summary, the UE receives the signal sent by the subband in the measurement bandwidth configured by the network device based on the subband, performs communication quality measurement according to the received signal to generate the measurement value of each subband corresponding to the UE, and determines whether the measurement value of the subband is greater than or equal to the second threshold corresponding to the subband. If the measurement value of the subband is greater than or equal to the second threshold corresponding to the subband, the measurement value of the subband is sent to the network device. Otherwise, the measurement value of the subband is not sent to the network device, which may assist the network device to reasonably adjust the subband configuration corresponding to the carrier according to the measurement values of the subband fed back by the UE, thus avoiding the problem of mutual interference between the plurality of UEs.

Corresponding to the communication method provided by the above-mentioned embodiments of FIGS. 1 to 3, the present disclosure also provides a communication apparatus. Since the communication device provided by embodiments of the present disclosure corresponds to the communication method provided by the above-mentioned embodiments of FIGS. 1 to 3, the implementation of the communication method is also applicable to the communication apparatus provided in embodiments of the present disclosure, and will not be described in detail in embodiments of the present disclosure.

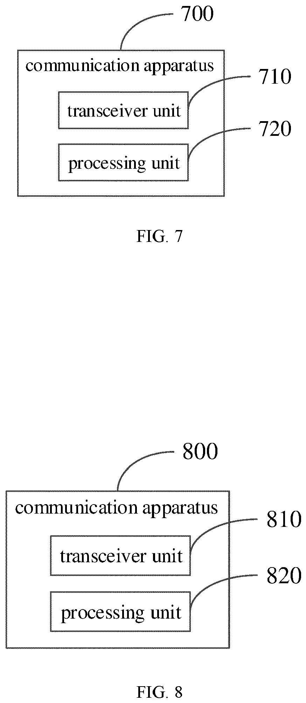

FIG. 7 is a schematic diagram of a communication apparatus provided by an embodiment of the present disclosure. The apparatus is applied to a network device.

As shown in FIG. 7, the communication apparatus 700 includes a transceiver unit 710 and a processing unit 720.

The transceiver unit 710 is configured to configure a measurement bandwidth and a subband of a carrier, communicate with a user equipment (UE) via the subband, and receive a measurement value of the subband fed back by the UE.

The processing unit 720 is configured to adjust subband configuration corresponding to the carrier according to the measurement value of the subband.

In one implementation of embodiments of the present disclosure, the subband configuration is used to configure types of a plurality of the subbands in the carrier. The types of the subbands include an uplink type, a downlink type and a flexible type.

In one implementation of embodiments of the present disclosure, when the type of the subband is the downlink type, the network device transmits data to the UE on the subband. When the type of the subband is the uplink type, the network device receives data transmitted by the UE on the subband. When the type of the subband is the flexible type, the network device configures the subband for uplink transmission, downlink transmission, or null transmission via a configuration signaling.

In one implementation of embodiments of the present disclosure, the processing unit is specifically configured to determine whether the measurement value of the subband reaches a first threshold corresponding to the subband; in case that the first threshold corresponding to the subband is reached, adjust the subband configuration according to the measurement value of the subband.

In one implementation of embodiments of the present disclosure, the network device receives a plurality of the measurement values fed back by the UE. The processing unit is specifically configured to: make a decision based on one measurement value in the plurality of the measurement values, or make a comprehensive decision based on the plurality of the measurement values to adjust the subband configuration.

In one implementation of embodiments of the present disclosure, the transceiver unit 710 is further configured to send the subband configuration adjusted to the UE.

In one implementation of embodiments of the present disclosure, the measurement value of the subband includes one or more of a reference signal received power (RSRP), a reference signal received quality (RSRQ), a received signal strength indication (RSSI), or a signal-to-interference-noise ratio (SINR).

In one implementation of embodiments of the present disclosure, the transceiver unit 710 is further configured to send the subband configuration to the UE via a configuration signaling.

In one implementation of embodiments of the present disclosure, the configuration signaling is a radio resource control (RRC) common signaling, a RRC dedicated signaling or a downlink control information (DCI) signaling.

The communication apparatus of embodiments of the present disclosure is applied to the network device, which configures the measurement bandwidth and subband of the carrier through the network device, communicates with the user equipment (UE) via the subband, receives the measurement value for the subband fed back by the UE, and adjust the subband configuration corresponding to the carrier according to the measurement value of the subband, which realizes that the network device reasonably adjusts the subband configuration corresponding to the carrier according to the subband measurement value fed back by the UE, thus avoiding the problem of mutual interference between the plurality of UEs. .

Corresponding to the communication method provided by the above-mentioned embodiments of FIGS. 4 to 6, the present disclosure also provides another communication apparatus. The communication apparatus provided by embodiments of the present disclosure corresponds to the communication method provided by the above-mentioned embodiments of FIGS. 4 to 6, and the implementation of the communication method is also applicable to the communication apparatus provided in embodiments of the present disclosure, and will not be described in detail in embodiments of the present disclosure.

FIG. 8 is a schematic diagram of another communication apparatus provided by an embodiment of the present disclosure. The apparatus is applied to a user equipment.

As shown in FIG. 8, a communication apparatus 800 includes a transceiver unit 810 and a processing unit 820.

The transceiver unit 810 is configured to receive signals sent by a network device via subbands in a measurement bandwidth based on subband configuration.

The processing unit 820 is configured to measure communication quality according to the signals received to generate a measurement value of each subband corresponding to the UE.

The transceiver unit 810 is further configured to send the measurement value of the subband to the network device.

In one implementation of embodiments of the present disclosure, the subband configuration is used to configure types of a plurality of subbands in a carrier. The types of the subbands include an uplink type, a downlink type and a flexible type.

In one implementation of embodiments of the present disclosure, when the type of the subband is the downlink type, the UE receives data transmitted by the network device on the subband; when the type of the subband is the uplink type, the UE transmits data to the network device on the subband; when the type of the subband is the flexible type, the network device configures the subband for uplink transmission, downlink transmission, or null transmission via a configuration signaling.

In one implementation of embodiments of the present disclosure, the transceiver unit is specifically configured to: determine whether the measurement value of the subband is greater than or equal to a second threshold corresponding to the subband; in case that the measurement value of the subband is greater than or equal to the second threshold corresponding to the subband, send the measurement value of the subband to the network device; in case that the measurement value of the subband is less than the second threshold corresponding to the subband, not send the measurement value of the subband to the network device.

In one implementation of embodiments of the present disclosure, the UE corresponds to a plurality of subbands, the transceiver unit is specifically configured to: for each subband corresponding to the UE, determine whether the measurement value of the subband is greater than or equal to the second threshold corresponding to the subband; in case that the measurement value of any subband is greater than or equal to the second threshold corresponding to the subband, send the measurement value of the subband to the network device; in case that the measurement value of each subband corresponding to the UE is less than the second threshold corresponding to the subband, not send the measurement value of the subband to the network device.

In one implementation of embodiments of the present disclosure, the transceiver unit is further configured to send an identifier of the measurement bandwidth and an identifier of the subband to the network device.

In one implementation of embodiments of the present disclosure, the measurement value of the subband comprises one or more of RSRP, RSRQ, RSSI, or SINR.

In one implementation of embodiments of the present disclosure, the transceiver unit is further configured to receive the subband configuration sent by the network device via a configuration signaling.

In one implementation of embodiments of the present disclosure, the configuration signaling is a RRC common signaling, a RRC dedicated signaling or a DCI signaling.

The communication apparatus of embodiments of the present disclosure is applied to a user equipment. The UE receives signals sent by the network device based on the subbands in the measurement bandwidth configured by the subband, measures communication quality according to the received signals to generate the measurement value of each subband corresponding to the UE, and sends the measurement value of the subband to the network device, which may assist the network device to reasonably adjust the subband configuration corresponding to the carrier according to the measurement value of the subband fed back by the UE, thus avoiding mutual interference between the plurality of UEs.

In order to implement the above-mentioned embodiments, the present disclosure provides a communication device. The communication device includes a processor and a memory. A computer program is stored in the memory. The processor executes the computer program stored in the memory to cause the device to execute the method described in embodiment of FIGS 1 to 3. For example, the communication device may be the network device in the above-mentioned embodiment.

In order to implement the above-mentioned embodiments, the present disclosure provides a communication device. The communication device includes a processor and a memory. A computer program is stored in the memory. The processor executes the computer program stored in the memory to cause the device to execute the method described in embodiment of FIGS 4 to 6. For example, the communication device may be the user equipment in the above-mentioned embodiment.

In order to implement the above-mentioned embodiments, the present disclosure provides a communication device, and the communication device includes a processor and an interface circuit. The interface circuit is configured to receive code instructions and transmit them to the processor. The processor is configured to run the code instructions to perform the method described in any embodiment of FIG. 1 to FIG. 3. For example, the communication device may be the network device in the above-mentioned embodiment.

In order to implement the above-mentioned embodiments, the present disclosure provides a communication device, and the communication device includes a processor and an interface circuit. The interface circuit is configured to receive code instructions and transmit them to the processor. The processor is configured to run the code instructions to perform the method described in any embodiment of FIG. 4 to FIG. 6. For example, the communication device may be the user equipment in the above-mentioned embodiment.

In order to implement the above-mentioned embodiments, the present disclosure provides a computer-readable storage medium having stored therein indications. When the instructions are executed, the method described in any embodiment of FIG. 1 to FIG. 3 is implemented.

In order to implement the above-mentioned embodiments, the present disclosure provides a computer-readable storage medium having stored therein indications. When the instructions are executed, the method described in any embodiment of FIG. 4 to FIG. 6 is implemented.

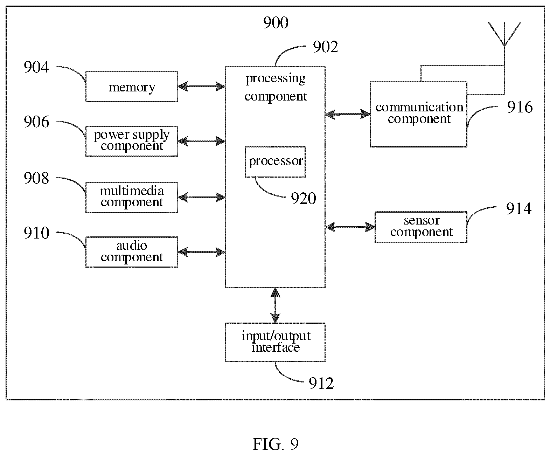

FIG. 9 is a block diagram of a user equipment (UE) 900 provided by an embodiment of the present disclosure. For example, the user equipment 900 may be a mobile phone, a computer, a digital broadcast user equipment, a messaging device, a gaming console, a tablet device, a medical device, a fitness device, a personal digital assistant, or the like.

Referring to FIG. 9, the user equipment 900 may include at least one of the following components: a processing component 902, a memory 904, a power supply component 906, a multimedia component 908, an audio component 910, an input/output (I/O) interface 912, a sensor component 914, and a communication component 916.

The processing component 902 generally controls the overall operations of the user equipment 900, such as the operations associated with display, telephone calls, data communications, camera operations, and recording operations. The processing component 902 may include at least one processor 920 to execute instructions to complete all or part of the steps of the above-mentioned method. Additionally, the processing component 902 may include at least one module that facilitate interaction between the processing component 902 and other components. For example, the processing component 902 may include a multimedia module to facilitate the interaction between the multimedia component 908 and the processing component 902.

The memory 904 is configured to store various types of data to support the operations at the user equipment 900. Examples of such data include instructions for any application or method operated on the user equipment 900, contact data, phonebook data, messages, pictures, videos, etc. The memory 904 may be implemented by using any type of volatile or non-volatile storage device, or a combination thereof, such as static random access memory (SRAM), an electrically erasable programmable read-only memory (EEPROM), an erasable programmable read-only memory (EPROM), a programmable read only memory (PROM), a read-only memory (ROM), a magnetic memory, a flash memory, a magnetic or optical disk.

The power supply component 906 provides power to various components of the user equipment 900. The power supply components 906 may include a power management system, at least one power supply, and any other components associated with the generation, management, and distribution of power tin the user equipment 900.

The multimedia component 908 includes a screen that provides an output interface between the user equipment 900 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touches, swipes, and gestures on the touch panel. The touch sensor may not only sense a boundary of a touch or a swipe operation, but also sense awake time and a pressure associated with the touch or the swipe operation. In some embodiments, the multimedia component 908 includes a front camera and/or a rear camera. The front camera and/or the rear camera may receive an external multimedia data while the user equipment 900 is in an operation mode, such as a photographing mode or a video mode. Each of the front camera and rear camera may be a fixed optical lens system or have a focal length and optical zoom capability.

The audio component 910 is configured to output and/or input audio signals. For example, the audio component 910 includes a microphone (MIC) configured to receive external audio signals when the user equipment 900 is in an operation mode, such as a call mode, a recording mode, and a voice recognition mode. The received audio signals may be further stored in the memory 904 or transmitted via communications component 916. In some embodiments, the audio component 910 further includes a speaker to output audio signals.

The I/O interface 912 provides an interface between the processing component 902 and a peripheral interface module, which may be a keyboard, a click wheel, a button, etc. These buttons may include, but are not limited to, a home button, a volume button, a starting button, and a locking button.

The sensor component 914 includes at least one sensor to provide status assessments of various aspects of the user equipment 900. For example, the sensor component 914 may detect an open/closed status of the user equipment 900, relative positioning of components, such as the display and keypad of the user equipment 900, a change in position of the user equipment 900 or a component of the user equipment 900, a presence or absence of user contact with the user equipment 900, an orientation or an acceleration/deceleration of the user equipment 900, and a change in temperature of the user equipment 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an acceleration sensor, a gyroscope sensor, a magnetic sensor, a pressure sensor, or a temperature sensor.

The communication component 916 is configured to facilitate communication, wired or wireless, between the user equipment 900 and other devices. The user equipment 900 may access a wireless network based on a communication standard, such as WiFi, 2G or 3G, or a combination thereof. In one illustrative embodiment, the communication component 916 receives a broadcast signal or broadcast related information from an external broadcast management system via a broadcast channel. In one illustrative embodiment, the communications component 916 further includes a near field communications (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology and other technologies.

In an illustrative embodiment, the user equipment 900 may be configured by at least one application specific integrated circuit (ASIC), digital signal processor (DSP), digital signal processing device (DSPD), programmable logic device (PLD), field programmable gate array (FPGA), controller, microcontroller, microprocessor or other electronic components to be implemented for executing the method shown in any one of the above-mentioned in FIGS 4 to 6.

In an illustrative embodiment, a non-transitory computer-readable storage medium including instructions, such as a memory 904 including instructions. The instruction may be executed by the processor 920 of the user equipment 900 to complete the above-mentioned method in FIGS. 4 to 6. For example, the non-transitory computer-readable storage medium may be ROM, random access memory (RAM), CD-ROM, magnetic tape, floppy disk, optical data storage device, etc.

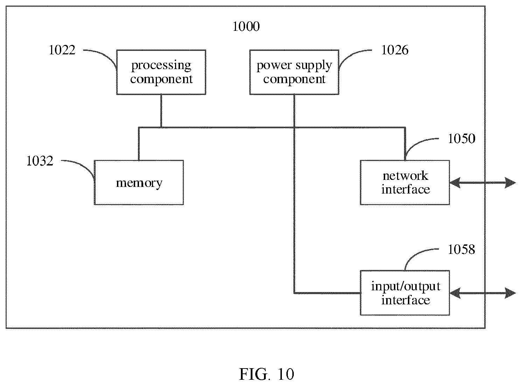

As shown in FIG. 10, it is a schematic diagram of a network device provided by an embodiment of the present disclosure. Referring to FIG. 10, a network device 1000 includes a processing component 1022, which further includes at least one processor, and memory resources represented by a memory 1032 for storing instructions, such as application programs, executable by the processing component 1022. The application program stored in the memory 1032 may include one or more modules, and each of them corresponds to a set of instructions. In addition, the processing component 1022 is configured to execute the instructions to perform any of the above-mentioned methods applied to the network device, for example, the methods shown in any one of FIGS. 4 to 6.

The network device 1000 may also include a power supply component 1026 configured to perform power management of the network device 1000, a wired or wireless network interface 1050 configured to connect the network device 1000 to a network, and an input/output (I/O) interface 1058. The network device 1000 may operate based on an operating system stored in the memory 1032, such as Windows Server^{™}, Mac OS X^{™}, Unix^{™}, Linux^{™}, FreeBSD^{™} or the like.

Other embodiments of the present disclosure will be readily apparent to those skilled in the art from consideration of the specification and practice of the present disclosure disclosed herein. The present disclosure is intended to cover any variations, uses, or adaptations of the present disclosure that follow the general principles of the present disclosure and include common sense or customary technical means in the technical field that are not disclosed in the present disclosure. It is intended that the specification and examples be considered as illustrative only, with a true scope and spirit of the disclosure being indicated by the following claims.

It is to be understood that the present disclosure is not limited to the precise structures described above and illustrated in the accompanying drawings, and various modifications and changes may be made without departing from the scope thereof. The scope of the present disclosure is limited only by the appended claims.

In order to implement the above-mentioned embodiments, embodiments of the present disclosure also provide a communication device. The communication device may be a network device, a user equipment, or a chip, a chip system, or a processor that supports the network device to implement the above-mentioned method, or may also be a chip, a chip system, or a processor that supports the user equipment to implement the above-mentioned method. The device may be used to implement the method described in any of the above-mentioned method embodiments. For details, reference may be made to the description in the above-mentioned method embodiments.

The communication device may include one or more processors. The processor may be a general-purpose processor or a special-purpose processor, etc. For example, it may be a baseband processor or a central processing unit. The baseband processor may be used to process communication protocols and communication data. The central processor may be used to control communication devices (such as base stations, baseband chips, user equipment, user equipment chips, DU or CU, etc.) and execute computer programs and processing data for computer programs.

Alternatively, the communication device may also include one or more memories, on which a computer program may be stored, and the processor executes the computer program, so that the communication device executes the method described in the above method embodiments. Alternatively, data may also be stored in the memory. The communication device and the memory may be provided separately or integrated together.

Alternatively, the communication device may also include a transceiver and an antenna. The transceiver may be called a transceiver unit, a transceiver, or a transceiver circuit, etc., and is configured to implement transceiver functions. The transceiver may include a receiver and a transmitter. The receiver may be called a receiver or a receiving circuit, etc., and is configured to implement the receiving function. The transmitter may be called a transmitter or a transmitting circuit, etc., and configured to implement the transmitting function.

Alternatively, the communication device may also include one or more interface circuits. The interface circuitry is configured to receive code instructions and transmit them to the processor. The processor executes code instructions to cause the communication device to perform the method described in any of the above-mentioned method embodiments.

In one implementation, a transceiver for implementing receiving and transmitting functions may be included in the processor. For example, the transceiver may be a transceiver circuit, an interface, or an interface circuit. The transceiver circuits, the interfaces or the interface circuits configured to implement the receiving and transmitting functions may be separate or integrated together. The above-mentioned transceiver circuit, the interface or the interface circuit may be configured for reading and writing codes/data, or the above-mentioned transceiver circuit, the interface or the interface circuit may be configured for signal transmission or transfer.

In one implementation, the processor may store a computer program, and the computer program runs on the processor, causing the communication device to perform the method described in any of the above-mentioned method embodiments. The computer program may be embedded in the processor, in which case the processor may be implemented in hardware.

In one implementation, the communication device may include a circuit, and the circuit may implement sending or receiving or communication functions in the above-mentioned method embodiments. The processor and transceiver described in the present disclosure may be implemented in an integrated circuits (IC), an analog IC, a radio frequency integrated circuits (RFIC), a mixed signal (IC), an application specific integrated circuits (ASIC), a printed circuit boards (PCB), electronic equipment, etc. The processor and the transceiver may also be manufactured using various IC process technologies, such as a complementary metal oxide semiconductor (CMOS), a N-type metal-oxide-semiconductor (NMOS), a P-type metal oxide semiconductor (PMOS), a bipolar junction transistor (BJT), a bipolar CMOS (BiCMOS), a silicon germanium (SiGe), a gallium arsenide (GaAs), etc.

The communication device described in the above-mentioned embodiments may be a network device or a user equipment, but the scope of the communication device described in the present disclosure is not limited thereto. The communication device may be a stand-alone device or may be part of a larger device. For example, the communication device may be:
(1) independent integrated circuit (IC), or chip, or chip system or subsystem;
(2) a collection of one or more ICs, or, the IC collection may also include storage components for storing data and computer programs;
(3) ASIC, such as modem;
(4) modules that may be embedded in other devices;
(5) receivers, terminal device, intelligent terminal device, cellular phones, wireless equipment, handheld devices, mobile units, vehicle-mounted equipment, network device, cloud equipment, artificial intelligence equipment, etc.;
(6) others.

In case that the communication device is a chip or a system on a chip, the chip includes a processor and an interface. The number of processors may be one or more, and the number of interfaces may be multiple.

Alternatively, the chip also includes a memory, which is configured to store necessary computer programs and data.

Those skilled in the art may also understand that the various illustrative logical blocks and steps listed in embodiments of the present disclosure may be implemented by electronic hardware, computer software, or a combination of both. Whether such functionality is implemented in hardware or software depends on the specific application and overall system design requirements. Those skilled in the art may use various methods to implement the functions for each specific application, but such implementation should not be understood as exceeding the scope of protection of embodiments of the present disclosure.

The present disclosure also provides a readable storage medium on which instructions are stored, and when the instructions are executed by a computer, the functions of any of the above-mentioned method embodiments are implemented.

The present disclosure also provides a computer program product. When the computer program product is executed by a computer, the functions of any of the above-mentioned method embodiments are implemented.

In the above-mentioned embodiments, it may be implemented in whole or in part by software, hardware, firmware, or any combination thereof. When implemented using software, it may be implemented in whole or in part in the form of a computer program product. A computer program product includes one or more computer programs. When a computer program is loaded and executed on a computer, processes or functions according to embodiments of the present disclosure are generated in whole or in part. The computer may be a general purpose computer, a special purpose computer, a computer network, or other programmable device. The computer program may be stored in or transmitted from one computer-readable storage medium to another computer-readable storage medium, for example, the computer program may be transmitted from a website, a computer, a server or a data center via a wireline (e.g. coaxial cable, optical fiber, digital subscriber line (DSL)) or wireless (such as infrared, wireless, microwave, etc.) means to transmit to another website, computer, server or data center. The computer-readable storage media may be any available media that may be accessed by a computer or a data storage device such as a server, data center, or other integrated media that contains one or more available media. The usable media may be magnetic media (e.g., floppy disks, hard disks, tapes), optical media (e.g., high-density digital video discs (DVDs)), or semiconductor media (e.g., solid state disks (SSDs)) and the like.

Those skilled in the art may understand that the first, second, and other numerical numbers involved in the present disclosure are only for convenience of description and are not used to limit the scope of embodiments of the present disclosure and also indicate the order.

At least one in the present disclosure may also be described as one or more, and the plurality may be two, three, four or more, and the present disclosure is not limited. In embodiments of the present disclosure, for a technical feature, the technical feature is distinguished by "first", "second", "third", "A", "B", "C" and "D", etc. The technical features described in "first", "second", "third", "A", "B", "C" and "D" are in no particular order or order.

A corresponding relationships shown in each table in the present disclosure can be configured or predefined. The values of the information in each table are only examples and may be configured as other values, which is not limited in the present disclosure. When configuring the correspondence between information and each parameter, it is not necessarily required to configure all the correspondences shown in each table. For example, in the table in the present disclosure, the corresponding relationships shown in some rows may not be configured. For another example, appropriate deformation adjustments may be made based on the above-mentioned table, such as splitting, merging, etc. The names of the parameters shown in the titles of the above tables may also be other names understandable by the communication device, and the values or expressions of the parameters may also be other values or expressions understandable by the communication device. When implementing the above tables, other data structures may also be used, such as arrays, queues, containers, stacks, linear lists, pointers, linked lists, trees, graphs, structures, classes, heaps, hash tables or hash tables.

Predefinition in the present disclosure may be understood as definition, pre-definition, storage, pre-storage, pre-negotiation, pre-configuration, solidification, or pre-burning.

Those skilled in the art will appreciate that the units and algorithm steps of each example described in conjunction with embodiments disclosed herein may be implemented with electronic hardware, or a combination of computer software and electronic hardware. Whether these functions are performed in hardware or software depends on the specific application and design constraints of the technical solution. Those skilled in the art may implement the described functionality using different methods for each specific application, but such implementations should not be considered to be beyond the scope of the present disclosure.

Those skilled in the art may clearly understand that for the convenience and simplicity of description, the specific working processes of the systems, devices and units described above may be referred to the corresponding processes in the foregoing method embodiments, and will not be described again here.

The above are only specific embodiments of the present disclosure, but the protection scope of the present disclosure is not limited thereto. Any skilled in the art may easily think of changes or substitutions within the technical scope disclosed in the present disclosure, which are covered by the protection scope of the present disclosure. Therefore, the protection scope of the present disclosure should be subject to the protection scope of the claims.

## Claims

1. A communication method, performed by a network device and comprising:
configuring a measurement bandwidth and a subband of a carrier, and communicating with a user equipment (UE) via the subband;
receiving a measurement value of the subband fed back by the UE;
adjusting subband configuration corresponding to the carrier according to the measurement value of the subband.

2. The method according to claim 1, wherein the subband configuration is used to configure types of a plurality of the subbands in the carrier, wherein the types of the subbands comprise an uplink type, a downlink type and a flexible type.

3. The method according to claim 2, wherein
when the type of the subband is the downlink type, the network device transmits data to the UE on the subband;
when the type of the subband is the uplink type, the network device receives data transmitted by the UE on the subband;
when the type of the subband is the flexible type, the network device configures the subband for uplink transmission, downlink transmission, or null transmission via a configuration signaling.

4. The method according to claim 1, wherein adjusting the subband configuration corresponding to the carrier according to the measurement value of the subband comprises:
determining whether the measurement value of the subband reaches a first threshold corresponding to the subband;
in case that the first threshold corresponding to the subband is reached, adjusting the subband configuration according to the measurement value of the subband.

5. The method according to any one of claims 1 to 4, wherein the network device receives a plurality of the measurement values fed back by the UE;
wherein adjusting the subband configuration corresponding to the carrier according to the measurement value of the subband comprises:
making a decision based on one measurement value in the plurality of the measurement values, or making a comprehensive decision based on the plurality of the measurement values to adjust the subband configuration.

6. The method according to any one of claims 1 to 5, further comprising:
sending the subband configuration adjusted to the UE.

7. The method according to any one of claims 1 to 6, wherein the measurement value of the subband comprises one or more of a reference signal received power (RSRP), a reference signal received quality (RSRQ), a received signal strength indication (RSSI), or a signal-to-noise and interference ratio (SINR).

8. The method according to any one of claims 1 to 7, further comprising:
sending the subband configuration to the UE via a configuration signaling.

9. The method according to claim 8, wherein the configuration signaling is a radio resource control (RRC) common signaling, a RRC dedicated signaling or a downlink control information (DCI) signaling.

10. A communication method, applied to UE and comprising:
receiving signals sent by a network device via subbands in a measurement bandwidth based on subband configuration;
measuring communication quality according to the signals received to generate a measurement value of each subband corresponding to the UE;
sending the measurement value of the subband to the network device.

11. The method according to claim 10, wherein the subband configuration is used to configure types of a plurality of subbands in a carrier, wherein the types of the subbands comprise an uplink type, a downlink type and a flexible type.

12. The method according to claim 11, wherein:
when the type of the subband is the downlink type, the UE receives data transmitted by the network device on the subband;
when the type of the subband is the uplink type, the UE transmits data to the network device on the subband;
when the type of the subband is the flexible type, the network device configures the subband for uplink transmission, downlink transmission, or null transmission via a configuration signaling.

13. The method according to claim 10, wherein sending the measurement value of the subband to the network device comprises:
determining whether the measurement value of the subband is greater than or equal to a second threshold corresponding to the subband;
in case that the measurement value of the subband is greater than or equal to the second threshold corresponding to the subband, sending the measurement value of the subband to the network device;
in case that the measurement value of the subband is less than the second threshold corresponding to the subband, not sending the measurement value of the subband to the network device.

14. The method according to claim 13, wherein the UE corresponds to a plurality of subbands, and sending the measurement value of the subband to the network device comprises:
for each subband corresponding to the UE, determining whether the measurement value of the subband is greater than or equal to the second threshold corresponding to the subband;
in case that the measurement value of any subband is greater than or equal to the second threshold corresponding to the subband, sending the measurement value of the subband to the network device;
in case that the measurement value of each subband corresponding to the UE is less than the second threshold corresponding to the subband, not sending the measurement value of the subband to the network device.

15. The method according to claim 10, further comprising:
sending an identifier of the measurement bandwidth and an identifier of the subband to the network device.

16. The method according to any one of claims 10 to 15, wherein the measurement value of the subband comprises one or more of RSRP, RSRQ, RSSI, or SINR.

17. The method according to any one of claims 10 to 16, further comprising:
receiving the subband configuration sent by the network device via a configuration signaling.

18. The method according to claim 17, wherein the configuration signaling is a RRC common signaling, a RRC dedicated signaling or a DCI signaling.

19. A communication apparatus, applied to a network device and comprising:
a transceiver unit configured to configure a measurement bandwidth and a subband of a carrier, communicate with a user equipment (UE) via the subband, and receive a measurement value of the subband fed back by the UE;
a processing unit configured to adjust subband configuration corresponding to the carrier according to the measurement value of the subband.

20. The apparatus according to claim 19, wherein the subband configuration is used to configure types of a plurality of the subbands in the carrier, wherein the types of the subbands comprise an uplink type, a downlink type and a flexible type.

21. The apparatus according to claim 20, wherein
when the type of the subband is the downlink type, the network device transmits data to the UE on the subband;
when the type of the subband is the uplink type, the network device receives data transmitted by the UE on the subband;
when the type of the subband is the flexible type, the network device configures the subband for uplink transmission, downlink transmission, or null transmission via a configuration signaling.

22. The apparatus according to claim 19, wherein the processing unit is specifically configured to:
determine whether the measurement value of the subband reaches a first threshold corresponding to the subband;
in case that the first threshold corresponding to the subband is reached, adjust the subband configuration according to the measurement value of the subband.

23. The method according to any one of claims 19 to 22, wherein the network device receives a plurality of the measurement values fed back by the UE;
wherein the processing unit is specifically configured to:
make a decision based on one measurement value in the plurality of the measurement values, or make a comprehensive decision based on the plurality of the measurement values to adjust the subband configuration.

24. The apparatus according to any one of claims 19 to 23, wherein the transceiver unit is further configured to send the subband configuration adjusted to the UE.

25. The apparatus according to any one of claims 19 to 24, wherein the measurement value of the subband comprises one or more of a reference signal received power (RSRP), a reference signal received quality (RSRQ), a received signal strength indication (RSSI), or a signal-to-noise and interference ratio (SINR).

26. The apparatus according to any one of claims 19 to 25, wherein the transceiver unit is further configured to send the subband configuration to the UE via a configuration signaling.

27. The apparatus according to claim 26, wherein the configuration signaling is a radio resource control (RRC) common signaling, a RRC dedicated signaling or a downlink control information (DCI) signaling.

28. A communication apparatus, applied to a UE and comprising:
a transceiver unit configured to receive signals sent by a network device via subbands in a measurement bandwidth based on subband configuration;
a processing unit configured to measure communication quality according to the signals received to generate a measurement value of each subband corresponding to the UE;
wherein the transceiver unit is further configured to send the measurement value of the subband to the network device.

29. The apparatus according to claim 28, wherein the subband configuration is used to configure types of a plurality of subbands in a carrier, wherein the types of the subbands comprise an uplink type, a downlink type and a flexible type.

30. The device according to claim 29, wherein:
when the type of the subband is the downlink type, the UE receives data transmitted by the network device on the subband;
when the type of the subband is the uplink type, the UE transmits data to the network device on the subband;
when the type of the subband is the flexible type, the network device configures the subband for uplink transmission, downlink transmission, or null transmission via a configuration signaling.

31. The apparatus according to claim 28, wherein the transceiver unit is specifically configured to:
determine whether the measurement value of the subband is greater than or equal to a second threshold corresponding to the subband;
in case that the measurement value of the subband is greater than or equal to the second threshold corresponding to the subband, send the measurement value of the subband to the network device;
in case that the measurement value of the subband is less than the second threshold corresponding to the subband, not send the measurement value of the subband to the network device.

32. The apparatus according to claim 31, wherein the UE corresponds to a plurality of subbands, and the transceiver unit is specifically configured to:
for each subband corresponding to the UE, determine whether the measurement value of the subband is greater than or equal to the second threshold corresponding to the subband;
in case that the measurement value of any subband is greater than or equal to the second threshold corresponding to the subband, send the measurement value of the subband to the network device;
in case that the measurement value of each subband corresponding to the UE is less than the second threshold corresponding to the subband, not send the measurement value of the subband to the network device.

33. The apparatus according to claim 28, wherein the transceiver unit is further configured to send an identifier of the measurement bandwidth and an identifier of the subband to the network device.

34. The apparatus according to any one of claims 28 to 33, wherein the measurement value of the subband comprises one or more of RSRP, RSRQ, RSSI, or SINR.

35. The apparatus according to any one of claims 28 to 34, wherein the transceiver unit is further configured to receive the subband configuration sent by the network device via a configuration signaling.

36. The apparatus according to claim 35, wherein the configuration signaling is a RRC common signaling, a RRC dedicated signaling or a DCI signaling.

37. A communication device, comprising:
a processor; and
a memory;
wherein a computer program is stored in the memory, and the processor executes the computer program stored in the memory to cause the device to execute the method according to any one of claims 1 to 9.

38. A communication device, comprising:
a processor; and
a memory;
wherein a computer program is stored in the memory, and the processor executes the computer program stored in the memory to cause the device to execute the method according to any one of claims 10 to 18.

39. A communication device, comprising:
a processor; and
an interface circuit configured to receive code instructions and transmit the code instructions to the processor;
wherein the processor is configured to run the code instructions to perform the method according to any one of claims 1 to 9.

40. A communication device, comprising:
a processor; and
an interface circuit configured to receive code instructions and transmit the code instructions to the processor;
wherein the processor is configured to run the code instructions to perform the method according to any one of claims 10 to 18.

41. A computer-readable storage medium having stored therein indications that, when executed, cause the method according to any one of claims 1 to 9 to be implemented.

42. A computer-readable storage medium having stored therein indications that, when executed, cause the method according to any one of claims 10 to 18 to be implemented.
